Europäisches Patentamt

European Patent Office

Office européen des brevets

(11) Publication number: **0 130 091**
**B1**

(12) **EUROPEAN PATENT SPECIFICATION**

(45) Date of publication of patent specification: **07.01.88**

(21) Application number: **84304396.9**

(22) Date of filing: **28.06.84**

(51) Int. Cl.⁴: **G 11 B 5/09**

(54) **Apparatus for recording and/or reproducing digital information signals.**

(30) Priority: **28.06.83 JP 116781/83**

(43) Date of publication of application:
**02.01.85 Bulletin 85/01**

(45) Publication of the grant of the patent:
**07.01.88 Bulletin 88/01**

(84) Designated Contracting States:
**AT DE FR GB NL**

(56) References cited:
**EP-A-0 052 519**
**EP-A-0 085 517**
**EP-A-0 086 566**
**EP-A-0 086 658**
**EP-A-0 092 403**

(73) Proprietor: **SONY CORPORATION**
**7-35 Kitashinagawa 6-Chome Shinagawa-ku**
**Tokyo 141 (JP)**

(72) Inventor: **Odaka, Kentaro c/o Sony Corporation**
**Patents Division 7-35 Kitashinagawa 6-chome**
**Shinagawa-ku Tokyo (JP)**
Inventor: **Fukami, Tadashi c/o Sony Corporation**
**Patents Division 7-35 Kitashinagawa 6-chome**
**Shinagawa-ku Tokyo (JP)**
Inventor: **Ozaki, Shinya c/o Sony Corporation**
**Patents Division 7-35 Kitashinagawa 6-chome**
**Shinagawa-ku Tokyo (JP)**

(74) Representative: **Cotter, Ivan John et al**
**D. YOUNG & CO. 10 Staple Inn**
**London WC1V 7RD (GB)**

Courier Press, Leamington Spa, England.

## Description

This invention relates to apparatus for recording and/or reproducing digital information signals, for example for recording an audio PCM signal on a magnetic tape by means of a rotary head.

In the event that a plurality of sampling frequencies (for example two frequencies of 44.1 kHz and 48 kHz) are selectively used for modulating an analog audio signal into an audio pulse-code-modulated (PCM) signal, it is desirable that it be possible for audio PCM signals of any of the sampling frequencies to be recorded and reproduced by the same apparatus.

In a conventional PCM tape recorder with a rotary head, in order to keep the recording density constant, the running speed of the magnetic tape and the speed of operation of a recording processing circuit are varied in proportion to the sampling frequency of the audio PCM signal to be recorded.

There is, however, a problem, in that that many parts must be switched according to the sampling frequency. First of all, it is necessary to switch a reproducing equaliser circuit and a phase-locked-loop (PLL) circuit for clock reproduction. Secondly, it is also necessary to switch a capstan servo circuit and a drum servo circuit according to a change of the running speed of the magnetic tape. Furthermore, an inconvenience arises in that recording time per cassette is changed when the tape speed is varied. Moreover, the defect arises that it is difficult to make a time code for editing coincident with absolute time at any sampling frequency.

According to the present invention there is provided apparatus for recording and/or reproducing a digital information signal, the apparatus comprising:

transducer means;

means for selecting one of n sampling frequencies fs1 to fsn; and

field clock generator means for generating a field clock signal for controlling the relative speed between the transducer means and a record carrier on which a digital information signal is to be recorded and/or from which a digital information signal is to be reproduced; characterised in that:

the field clock generator means is operative to generate a field clock signal having a frequency F which is the same for all of the n sampling frequencies and is equal to $fsi/Ni$, where $fsi$ represents any one of the n sampling frequencies and $Ni$ represents the number of data words in one field of the digital information signal for that sampling frequency; and

means is provided to generate a master clock signal, which is the same for all of the n sampling frequencies, for controlling recording of data on the record carrier or reproduction of data from the record carrier.

Preferred apparatus embodying the invention and described hereinbelow incorporates the following advantages. Changes of the tape speed, the speed of drum rotation and analog circuitry (equaliser, PLL etc.) of the recording and/or reproducing system are not necessary when the sampling frequency is made different. Changes of the constitution of the recording system, for example an encoder of an error correction code, the frequency of a master clock for a recording data processing circuit, capstan or drum servo circuit, are not necessary when the sampling frequency is made different. Changes of the constitution of the analog circuitry (equaliser, PLL etc.) and of a decoding circuit of the reproducing circuit are not necessary when the sampling frequency is made different. The number of parts to be changed can be small, and it is not necessary to provide circuitry corresponding to the difference of the sampling frequency. The recording time for a predetermined quantity of tape, for example one cassette, is not changed, and the inconvenience that a time code does not coincide with the absolute time does not occur.

The invention will now be further described, by way of illustrative and non-limiting example, with reference to the accompanying drawings, in which:

Figure 1 is a schematic diagram showing a head arrangement of an embodiment of the present invention;

Figure 2 is a block diagram showing a circuit arrangement of an embodiment of the present invention;

Figure 3 is a schematic diagram showing the constitution or format of data of one field in an embodiment of the present invention; and

Figures 4A to 4C, 5A and 5B are schematic diagrams showing the format of recording data in an embodiment of the present invention.

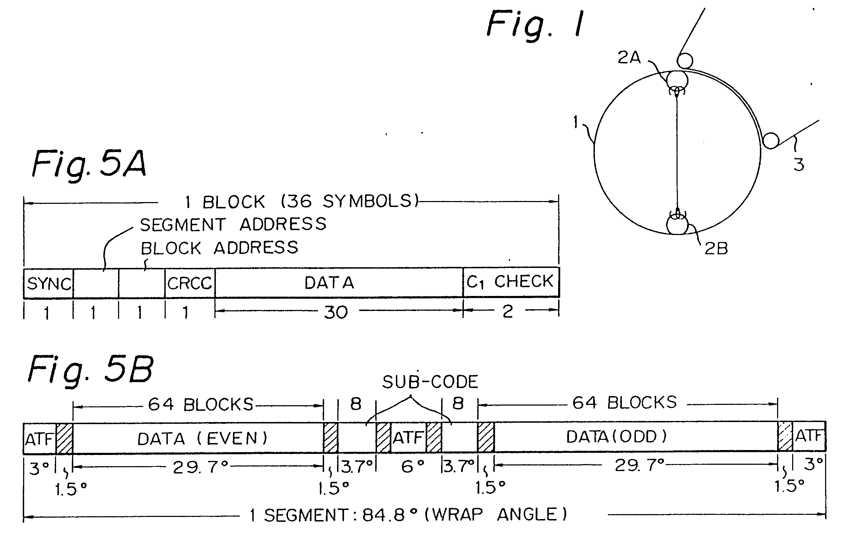

Figure 1 shows a rotary tape guide drum 1 of apparatus embodying the invention. The drum 1 has a pair of magnetic heads 2A, 2B. A magnetic tape 3 is wrapped at a wrap angle of about 90 degrees around the tape guide drum 1, which has a diameter of 30 mm, and is run under this condition. The tape guide drum 1 is rotated at a frame frequency of, for example, 100/3 Hz, so that data of every one field are recorded as an oblique segment on the magnetic tape 3 by the magnetic heads 2A, 2B, alternately.

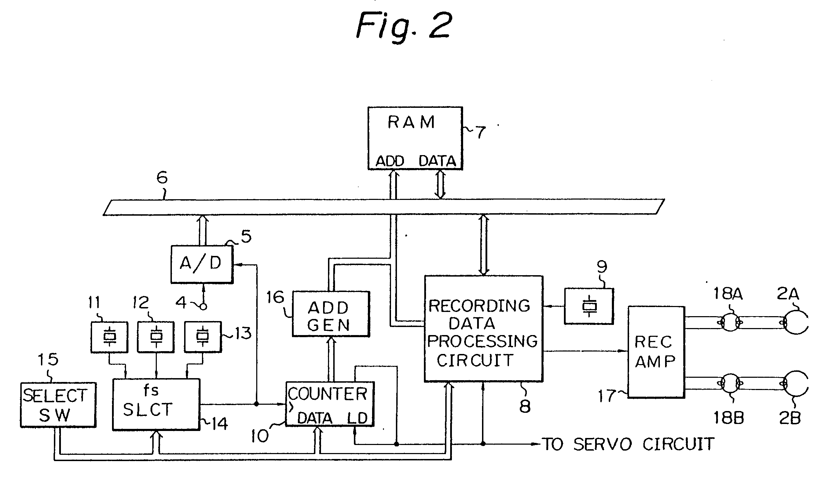

Figure 2 shows the construction of a recording circuit of the apparatus embodying the invention. An input terminal 4, which is applied with an analog audio signal to be recorded, is connected to an analog-to-digital (A/D) converter 5, in which the audio signal is digitised into a digital data word of 16 bits for every sample and supplied to a data bus 6.

A random access memory (RAM) 7 and a recording data processing circuit 8 are connected to the data bus 6. The audio PCM signal derived at the output of the A/D converter 5 is written into the RAM 7, and then read out from the RAM 7 so as to be supplied to the recording data processing circuit 8.

The recording data processing circuit 8 manages encoding of an error correction code or codes, interleaving, time base compression and digital signal modulation. For the purposes of such management, a master clock signal is supplied from a clock signal generating circuit 9 and a field frequency clock signal (a field clock signal) is supplied from a counter 10.

Sampling clock signal generating circuits 11, 12, 13 derive sampling clock signals of frequencies fs1, fs2, fs3, respectively. (These frequencies may, for instance, be fs1=48 kHz, fs2=44.1 kHz, fs3=32 kHz). Outputs of the sampling clock signal generating circuits 11, 12, 13 are supplied to a selector 14.

The selector 14 is controlled by a selecting signal which is produced by a selecting switch 15 so that a sampling clock signal of predetermined frequency is supplied to the A/D converter 5 and the counter 10. The selecting signal is supplied to a preset input terminal of the counter 10 and the recording data processing circuit 8.

The counter 10 produces the field clock signal as well as a parallel output which is supplied to an address signal generating circuit 16. The address signal generating circuit 16 provides the RAM 7 with an address signal which varies sequentially. The recording data processing circuit 8 supplies the RAM 7 with an address signal for interleaving. According to the address signal from the recording data processing circuit 8, the audio PCM signal is written into the RAM 7 with interleaving as well as check words of an error correction code which is generated in the recording processing circuit 8. Then, the PCM words and check words are sequentially read out from the RAM 7 according to the address signal from the address generating circuit 16.

The RAM 7 has twice as much memory capacity as needed to be able to store the data of one segment so that, while the encoding of the error correction code of the PCM data which is stored in one side or part of the memory area is carried out, the input PCM data is stored in another side or part of the memory area. Data to be recorded from the recording data processing circuit 8 is supplied to the rotary heads 2A, 2B through rotary transformers 18A, 18B and is recorded on the magnetic tape 3.

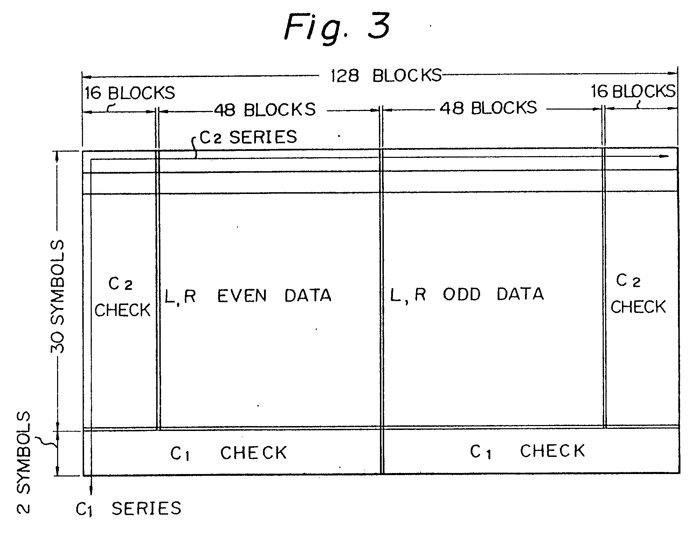

Figure 3 shows a code constitution or format of the data included in one field. The PCM data and two kinds of check data of error correction codes C1, C2 make up a two-dimensional array in which one block (one column) comprises 32 symbols of each row in the vertical direction, and 128 blocks to which block addresses numbered 0 to 127 are allocated are arranged in the horizontal direction. A first error correction code C1 is added to the vertical direction of the two-dimensional array, while a second error correction code C2 is added to its horizontal direction. The encoding of the error correction is performed using eight bits as one symbol. Therefore, sampled data of one word (16 bits) is divided into its upper or more significant 8 bits and its lower or less significant 8 bits. The two dimensional array includes PCM data symbols of audio signal channels (L, R).

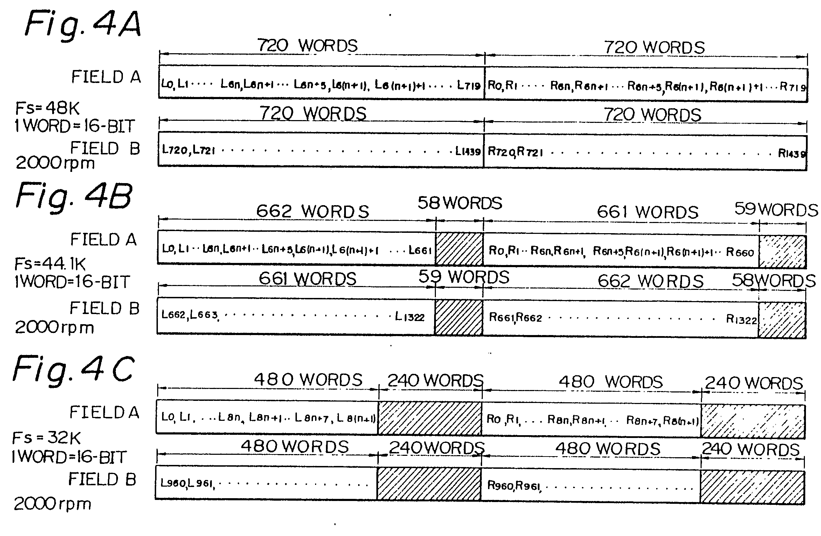

When the sampling frequency is fs1 (=48 kHz), PCM data of a total of 1440 words with regard to both channels L0 to L719 and R0 to R719 are recorded in one segment, as shown in Figure 4A. Those of the 1440 (=70×2) symbols which are included in the words bearing odd numbers of each channel among the PCM data of one segment make up 48 blocks, and those of the same number of symbols which are included in the words bearing even numbers of each channel among the PCM data of one segment make up 48 blocks. The error correction code C2 is a Reed Solomon code based on a Galois Field GF ($2^8$) of (32, 24) and 8 check symbols are formed with regard to total 24 symbols of the blocks at every four blocks among the 96 blocks. The C2 check symbols of 32 (=8×4) are arranged at both sides of the two dimensional array. Therefore, a total of 128 blocks are arranged in the lateral direction.

The encoding of the error correction code C1 is performed using the data of every block. The error correction code C1 is a Reed Solomon code based on a Galois Field GF ($2^8$) of (32, 30). Each two check symbols of the error correction code C1 (C1 check symbols) are arranged at the lowest row of the two-dimensional array. The PCM data of one segment is recorded on the magnetic tape 3 sequentially from the first block.

Each block in the array shown in Figure 3 has a data format shown in Figure 5A. Namely, a block sync signal of eight bits (one symbol) is added to the head, a segment address of eight bits and a block address of eight bits are added following the block sync signal, and a cyclic redundancy check (CRC) code (eight bits) for error detection of the segment address and block address is added after the block address. A most significant bit (MSB) of the block address is used to discriminate the block address of the data from the block address of the subcode. Furthermore, data amounting to 30 symbols (audio data or check code C2) is arranged after the CRC code. Two symbols of check code C1 are arranged in the last portion.

On the other hand, the data of one segment which is produced by the rotary head has a data format shown in Figure 5B. In this embodiment, one segment is formed by the rotary heads 2A and 2B in the oblique direction of the magnetic tape 3 which is wrapped around the tape guide drum 1 having a diameter of 30 mm. Pilot signals ATF for automatically following the track are recorded in each interval of 3 degrees in both end portions and in the central portion of this segment. The reason why the pilot signals are recorded in these three portions is to avoid a risk that the pilot signals cannot be reproduced due to dropout. Any tracking error is detected on the basis of the reproduced output of these pilot signals ATF and a piezoelectric element which supports the rotary heads 2A, 2B is driven on the basis of this detection, thereby removing the tracking error.

In addition, the data of the block addresses (0 to 63) shown in Figure 3 is sequentially recorded in a range of an angle of 29.7 degrees. Furthermore, the subcodes of four blocks, such as time codes, display data and the like, are written twice, before and after the pilot signal ATF in the central portion. The data of

3

the block addresses (64 to 127) shown in Figure 3 is sequentially recorded in a range of 29.7 degrees. Also, in Figures 5A, 5B, intervals of each angle of 1.5 degrees shown as cross-hatched portions denote interblock gaps where no data is recorded, pulse signals of a constant frequency being recorded in these intervals.

As shown in Figure 4B, when the sampling frequency is fs2 (=44.1 kHz), 1323 words (2646 symbols) of 2 channels are recorded in one field. As shown in Figure 4C, when the sampling frequency is fs3 (=32 kHz), 960 words (1920 symbols) of 2 channels are recorded in one field. Whenever the sampling frequency is fs2 or fs3, the error correcting code is formed in the same format as shown in Figure 3. Namely, the data making up one field comprises 32 symbols×128 blocks, the error correcting codes C1, C2 used not being changed. For this reason, a master clock signal of a single kind is supplied to the recording data processing circuit 8 from the clock signal generating circuit 9. The number of data words is reduced in proportion to the sampling frequency so as to cause a data blanking area in one field. The data blanking areas has inserted therein, for instance, dummy symbols, each of which has 16 bits all of value "0", or symbols which comprise control data.

The sampling frequencies fs1, fs2, fs3 and the numbers N1, N2, N3 of data words in one field satisfy the following relationship:

$$fs1/N1 = fs2/N2 = fs3/N3 = F,$$

$$48000/1440 = 44100/1323 = 32000/960 = 100/3 (Hz),$$

where F is the field frequency of the field clock signal which is generated in the counter 10. The field clock signal is supplied to the drum servo circuit of the tape guide drum 1 and capstan servo circuit as servo standard signals. The running speed of the magnetic tape 3 is made constant despite the difference of the sampling frequency.

When the sampling frequency is 32 kHz, the number of bits of each sampling word may be reduced from 16 to 14, and the number of data words in one field may be reduced from 960 to 720. In this case, the number of data words in one field is half that in the case when the sampling frequency is 48 kHz.

**Claims**

1. Apparatus for recording and/or reproducing a digital information signal, the apparatus comprising:
transducer means (2A, 2B);
means (14, 15) for selecting one of n sampling frequencies fs1 to fsn; and
field clock generator means (10) for generating a field clock signal for controlling the relative speed between the transducer means (2A, 2B) and a record carrier (3) on which a digital information signal is to be recorded and/or from which a digital information signal is to be reproduced; characterised in that:
the field clock generator means (10) is operative to generate a field clock signal having a frequency F which is the same for all of the n sampling frequencies and is equal to fsi/Ni, where fsi represents any one of the n sampling frequencies and Ni represents the number of data words in one field of the digital information signal for that sampling frequency; and
means (9) is provided to generate a master clock signal, which is the same for all of the n sampling frequencies, for controlling recording of data on the record carrier (3) on reproduction of data from the record carrier (3).

2. Apparatus according to claim 1, wherein the transducer means comprises a pair of rotary heads (2A, 2B) capable of recording the digital information signal on a record carrier (3) in the form of a magnetic tape.

3. Apparatus according to claim 1 or claim 2, wherein there are at least two sampling frequencies of 48 kHz and 44.1 kHz, respectively, and the numbers of data words in one field are 1440 and 1323, respectively, so that the frequency of the field clock signal is 100/3 Hz.

4. Apparatus according to claim 1, claim 2 or claim 3, wherein an area which does not contain the digital information signal of said one field includes blanking data.

5. Apparatus according to claim 1, claim 2 or claim 3, wherein an area which does not contain the digital information signal of said one field includes control data.

**Patentansprüche**

1. Gerät zur Aufzeichnung und/oder Wiedergabe eines digitalen Informationssignals, mit einer Wandlereinrichtung (2A, 2B),
Mitteln (14, 15) zum Auswählen einer von n Abtastfrequenzen fs1 bis fsn und
einem Feld-Taktgenerator (10) zum Erzeugen eines Feld-Taktsignals zum Steuern der relativen Geschwindigkeit zwischen den Wandlern (2A, 2B) und einem Aufzeichnungsträger (3), auf welchen ein digitales Informationssignal aufzuzeichnen ist und/oder von welchem ein digitales Informationssignal wiederzugeben ist, dadurch gekennzeichnet, daß
der Feld-Taktgenerator (10) betreibbar ist, um ein Field-Taktsignal zu erzeugen, das eine Frequenz F hat, welche dieselbe für alle der n Abtastfrequenzen ist und gleich fsi/Ni ist, wobei fsi irgendeine der n Abtastfrequenzen repräsentiert und Ni die Anzahl von Datenwörtern in einem Feld des digitalen Informationssignals für diese Abtastfrequenz repräsentiert, und

ein Mittel (9) vorgesehen ist, um ein Haupttaktsignal, das dasselbe für alle der n Abtastfrequenzen ist, zum Steuern des Aufzeichnens von Daten auf dem Aufzeichnungsträger (3) oder zum Wiedergeben von Daten von dem Aufzeichnungsträger (3) zu erzeugen.

2. Gerät nach Anspruch 1, bei dem die Wandler einrichtung ein Paar von Drehköpfen (2A, 2B) aufweist, die in der Lage sind, das digitale Informationssignal auf einem Aufzeichnungsträger (3) in Form eines Magnetbandes aufzuzeichnen.

3. Gerät nach Anspruch 1 oder 2, bei dem zumindest zwei Abtastfrequenzen von 48 kHz bzw. 44,1 kHz vorgesehen sind und die Anzahl der Datenwörter in einem Feld 1440 bzw. 1323 beträgt, so daß die Frequenz des Feld-Taktsignals 100/3 Hz ist.

4. Gerät nach Anspruch 1, 2 oder 3, bei dem ein Bereich, der das digitale Informationssignal des einen Felds nicht beinhaltet, Austastdaten enthält.

5. Gerät nach Anspruch 1, 2 oder 3, bei dem ein Bereich, der nicht das digitale Informationssignal des einen Feldes beinhaltet, Steuerdaten enthält.

**Revendications**

1. Appareil d'enregistrement et/ou de reproduction d'un signal d'information numérique, l'appareil comportant:

un dispositif transducteur (2A, 2B);

un dispositif (14, 15) de sélection de l'une de n fréquences d'échantillonnage fs1 à fsn; et un dispositif générateur d'horloge de trame (10) destiné à produire un signal d'horloge de trame pour commander la vitesse relative entre le dispositif transducteur (2A, 2B) et un support d'enregistrement (3) sur lequel un signal d'information numérique doit être enregistré et/ou à partir duquel un signal d'information numérique doit être reproduit; caractérisé en ce que:

le dispositif générateur d'horloge de trame (10) a pour fonction de produire un signal d'horloge de trame ayant une fréquence F qui est la même pour toutes les n fréquences d'échantillonnage et qui est égale à fsi/Ni, où fsi représente l'une quelconque des n fréquences d'échantillonnage et Ni représente le nombre des mots de données dans une trame du signal d'information numérique pour cette fréquence d'échantillonnage; et

un dispositif (9) est prévu pour produire un signal d'horloge pilote qui est le même pour toutes les n fréquences d'échantillonnage, afin de commander l'enregistrement de données sur le support d'enregistrement (3) ou la reproduction de données à partir du support d'enregistrement (3).

2. Appareil selon la revendication 1, dans lequel le dispositif transducteur comporte deux têtes rotatives (2A, 2B) permettant d'enregistrer le signal d'information numérique sur un support d'enregistrement (3) sous la forme d'une bande magnétique.

3. Appareil selon la revendication 1 ou 2, dans lequel existent au moins deux fréquences d'échantillonnage, de 48 KHz et 44,1 KHz respectivement, le nombre des mots de données dans une trame étant 1440 et 1323 respectivement, si bien que la fréquence du signal d'horloge de trame est 100/3 Hz.

4. Appareil selon la revendication 1, la revendication 2 ou la revendication 3, dans lequel une zone qui ne contient pas le signal d'information numérique de ladite trame contient des données de blocage.

5. Appareil selon la revendication 1, la revendication 2 ou la revendication 3 dans lequel une zone qui ne contient pas le signal d'information numérique de ladite trame contient des données de commande.

## Fig. 1

2A

1

3

2B

## Fig. 5A

1 BLOCK (36 SYMBOLS)

SEGMENT ADDRESS
BLOCK ADDRESS

| SYNC | | | CRCC | DATA | C₁ CHECK |
|------|---|---|------|------|----------|
| 1 | 1 | 1 | 1 | 30 | 2 |

## Fig. 5B

SUB-CODE

| ATF | | DATA (EVEN) | | | ATF | | | DATA (ODD) | | ATF |
|-----|---|-------------|---|---|-----|---|---|------------|---|-----|
| 3° | | 29.7° | | 3.7° | 6° | 3.7° | | 29.7° | | 3° |
| | 1.5° | | 64 BLOCKS → ← 8 | | | | 8 | ← 64 BLOCKS | 1.5° | |

1.5°          1.5°          1.5°          1.5°

1 SEGMENT : 84.8° (WRAP ANGLE)

0 130 091

Fig. 2

Fig. 3

## Fig. 4A

FIELD A
Fs=48K
1 WORD=16-BIT

FIELD B
2000 rpm

| 720 WORDS | 720 WORDS |
|---|---|
| Lo,L1 ···· L6n,L6n+1 ··· L6n+5,L6(n+1), L6(n+1)+1 ···· L719 | Ro,R1 ···· R6n,R6n+1 ··· R6n+5,R6(n+1),R6(n+1)+1 ··· R719 |
| 720 WORDS | 720 WORDS |
| L720,L721 ······················· L1439 | R720R721 ···················· R1439 |

## Fig. 4B

FIELD A
Fs=44.1K
1 WORD=16-BIT

FIELD B
2000 rpm

| 662 WORDS | 58 WORDS | 661 WORDS | 59 WORDS |
|---|---|---|---|
| Lo,L1 ·· L6n,L6n+1 ·· L6n+5,L6(n+1),L6(n+1)+1 ··· L661 | | Ro,R1 ·· R6n,R6n+1, R6n+5,R6(n+1),R6(n+1)+1 ·· R660 | |
| 661 WORDS | 59 WORDS | 662 WORDS | 58 WORDS |
| L662,L663 ················· L1322 | | R661,R662 ············· R1322 | |

## Fig. 4C

FIELD A
Fs = 32K
1 WORD=16-BIT

FIELD B
2000 rpm

| 480 WORDS | 240 WORDS | 480 WORDS | 240 WORDS |
|---|---|---|---|
| Lo,L1, ...L8n, L8n+1 ·· L8n+7, L8(n+1) | | Ro,R1, ... R8n,R8n+1 ·· R8n+7,R8(n+1) | |
| 480 WORDS | 240 WORDS | 480 WORDS | 240 WORDS |
| L960,L961, ·············· | | R960,R961, ············· | |

0 130 091